# EUROPÄISCHE PATENTSCHRIFT

(11) **EP 0 270 871 B1**
(45) Veröffentlichungstag und Bekanntmachung des Hinweises auf die Patenterteilung: **02.03.1994**
(21) Anmeldenummer: 87116771.4
(22) Anmeldetag: 13.11.1987
(51) Int. Cl.: G05B 19/04, G05B 23/02, G06F 13/22

(54) **System zur Ein- und/oder Ausgabe von Signalen eines digitalen Steuersystems**
Input/output system for signals in a digital control system
Système pour l'entrée/sortie de signaux dans un système de commande digitale

(30) Priorität: 12.12.1986 DE 3642500
(43) Veröffentlichungstag der Anmeldung: 15.06.1988
(73) Patentinhaber: Heidelberger Druckmaschinen Aktiengesellschaft, D-69019 Heidelberg (DE)
(72) Erfinder: Rodi, Anton, Dipl.-Ing. (FH), D-6906 Leimen 3 (DE); Hauck, Dieter, D-6930 Eberbach (DE); May, Karl-Heinz, Dipl.-Ing. (FH), D-6806 Viernheim (DE); Müller, Hans, Dipl.-Ing. (FH), D-6902 Sandhausen (DE)
(74) Vertreter: Stoltenberg, Heinz-Herbert Baldo

(56) Entgegenhaltungen:
- DE-A- 3 005 872
- DE-A- 3 310 403
- DE-A- 3 540 066
- FR-A- 2 565 378
- US-A- 4 155 115
- US-A- 4 155 116
- PATENT ABSTRACTS OF JAPAN, Band 11, Nr. 334 (P-631)(2781), 31. Oktober 1987;& JP-A-62115548
- ELEKTRONIK, Band 32, Nr. 20, Oktober 1983, Seiten 153-157, München, DE; H.-U. ZERBST et al.: "Höhere Zuverlässigkeit für Mikrocomputer"

## Beschreibung

Die Erfindung betrifft eine Schaltung zur Ein- und Ausgabe von Signalen eines digitalen Steuersystems mit einer Steuereinheit, einer mit Eingangsregistern versehenen Eingangsschaltung, einer einer Endstufe vorgeschalteten, mit Ausgangsregistern versehenen Ausgangsschaltung und einem Bussystem zur Steuerung und Prüfung der Eingangsschaltung, der Ausgangsschaltung mit der Endstufe und/oder der mit der Eingangsschaltung verbundenen Peripherieeinheiten.

Die Steuerung von Maschinen und Anlagen mit Hilfe von digitalen Steuerfunktionen umfaßt häufig auch Funktionen, bei welchen Fehler zu erheblichen materiellen Schaden oder sogar zu Gefährdungen von Personen führen können. Insbesondere bei komplexen Strukturen werden deshalb sehr hohe Anforderungen an die Zuverlässigkeit einzelner System-Komponenten gestellt. Deshalb ist es erforderlich, beim Einschalten oder während des Betriebes einer Anlage eine Fehlerdiagnose zu realisieren, um Fehler schnell zu erkennen und im sicherheitstechnischen Sinn zu beherrschen. Insbesondere im Bereich der Peripherie-Einheiten und Schnittstellen ist eine Überwachung erforderlich.

Diese Forderungen werden insbesondere an Systeme zur Steuerung von Druckmaschinen gestellt, da hierbei einerseits die Zahl der Geber und Stellglieder recht hoch ist und ihre Funktion an die Anforderungen im Einzelfall anzupassen ist. Andererseits steht häufig beim Betrieb von Druckmaschinen auf dem Gebiet der Elektronik geschultes Personal nicht zur Verfügung.

In der DE-OS 30 05 872 ist eine Prüfeinrichtung für Eingabebaugruppen und Ausgabebaugruppen einer programmierbaren Steuerung beschrieben. Die Prüfeinrichtung weist eine Mehrzahl von Eingabeanschlüssen und Ausgabeanschlüssen auf, wobei jeder Eingabeanschluß über mindestens eine Eingabebaugruppe bzw. jeder Ausgabeanschluß über mindestens eine Ausgabebaugruppe, zu der ein Adreßdekoder gehört, verbunden ist, und bei der Zustandsabfrage während des Steuervorgangs durchgeführt werden, unter Verwendung von Prüfpunkten, die zu Prüfpunktgruppen zusammengefaßt sind und deren Zustandssignale die Antworten auf die Zustandsabfragen darstellen.

Ein Prozeß-Eingabe/Ausgabegerät für eine Folgesteuervorrichtung ist in der DE 35 40 066 A1 offenbart. Das dort beschriebene Prozeß-Eingabe/Ausgabegerät für eine Folgesteuerschaltung besteht aus einer Eingabeeinrichtung mit einer Leseeinrichtung zum Lesen eines Eingangssignals von einer externen Anlage, einer Einrichtung zum Beurteilen eines Eingangszustands eines externen Eingangssignals aus dem gelesenen Signal und einer ersten Speichereinrichtung zum Speichern des Eingangszustands, was durch die Beurteilung einer Entscheidung unterworfen ist; einer Ausgangseinrichtung mit einer zweiten Speichereinrichtung zum Speichern von Daten, die von einem Bus der Folgesteuervorrichtung abgegeben werden und an die externe Anlage zu liefern sind, und mit einer Ausgangs-Steuereinrichtung zum Steuern und Halten der zur externen Anlage zu liefernden Daten, die in der zweiten Speichereinrichtung gespeichert sind; einer Einstelleinrichtung zum Einstellen der Umschaltung zwischen der Eingangseinrichtung und der Ausgangseinrichtung, und der Umschaltung der Zahl der Eingabe/Ausgabe-Punkte und der Antwortzeit für die Eingabe; und einer Bus-Steuereinrichtung zum Übertragen von Daten zwischen der ersten und der zweiten Speichereinrichtung.

Die Aufgabe der vorliegenden Erfindung ist es, eine Überwachung der Peripherie-Einheiten zuverlässig zu ermöglichen und bei möglichst geringem Aufwand eine hohe Flexibilität bezüglich verschiedener zu steuernder Druckmaschinen und bezüglich verschiedener Steuereinheiten zu erreichen.

Die erfindungsgemäße Schaltung ist dadurch gekennzeichnet, daß die Ausgangssignale der Endstufe und der Inhalt der Ausgangsregister über getrennte Wege stetig abfragbar sind, wobei die Abfrage der Ausgangssignale mittels einer über ein digitales Filter mit der Eingangsschaltung verbundenen Eingangsspannungs-Anpassung potentialunabhängig und die Abfrage der Inhalte der Ausgangsregister über eine in der Ausgangsschaltung angeordnete Logikschaltung erfolgt, daß zur Prüfung der Eingangsschaltung deren Eingänge von der Steuereinheit über eine Testmusteraufschaltung Testsignale über ein digitales Filter aufschaltbar sind, wobei in der Steuereinheit die infolge des Testmusters entstehenden Ausgangssignale (D) der Eingangsschaltung auf Übereinstimmung geprüft werden, daß eine mit der Eingangsschaltung und der Endstufe verbundene Interruptsteuerung zur Auslösung einer Unterbrechung des Programmablaufs mittels eines mit der Steuereinheit verbundenen Anschlusses vorgesehen ist, wobei die Unterbrechung durch festgestellte Fehler in der Eingangsschaltung, der Ausgangsschaltung der Endstufenschaltung oder in den Peripherieeinheiten ausgelöst wird.

Durch die erfindungsgemäßen Maßnahmen ist es möglich, nicht nur den Bereich der Ausgangsschaltungen zu überwachen, sondern auch Fehler im Bereich der Peripherie-Einheiten, wie beispielsweise Anzeigeleuchten, elektro-mechanische Stellglieder, Relais oder Schalter zu erkennen. Ferner können Störungsmeldungen abgegeben werden, wenn im Bereich der Verkabelung Fehler auftreten. Dadurch trägt die Erfindung dazu bei, den Anteil der durch ein entsprechendes Überwachungsprogramm beziehungsweise Fehlerdiagnoseprogramm erkennbaren Fehler innerhalb des gesamten Systems, beispielsweise einer Druckmaschine und ihres digitalen Steuersystems, wesentlich zu erhöhen.

Durch die in den weiteren Unteransprüchen aufgeführten Maßnahmen sind vorteilhafte Weiterbildungen und Verbesserungen der im Hauptanspruch angegebenen Schaltung möglich.

Ausführungsbeispiele der Erfindung sind in der Zeichnung an Hand mehrerer Figuren dargestellt und in der nachfolgenden Beschreibung näher erläutert. Es zeigt:
- Fig. 1: ein Blockschaltbild eines Systems zur Ein- und/oder Ausgabe,
- Fig. 2: eine Ausgangsschaltung,
- Fig. 3: einen Pulsfrequenzteiler,
- Fig. 4: zwei Ausführungsbeispiele einer Endstufe und einer Anpassungsschaltung,
- Fig. 5: ein weiteres Ausführungsbeispiel einer Anpassungsschaltung,
- Fig. 6: ein digitales Filter,
- Fig. 7: eine Eingangsschaltung mit Interrupt-Erzeugung bei Änderung des Eingangssignals,
- Fig. 8: eine Interrupt-Auslöseschaltung und
- Fig. 9: ein drittes Ausführungsbeispiel einer Anpassungsschaltung.

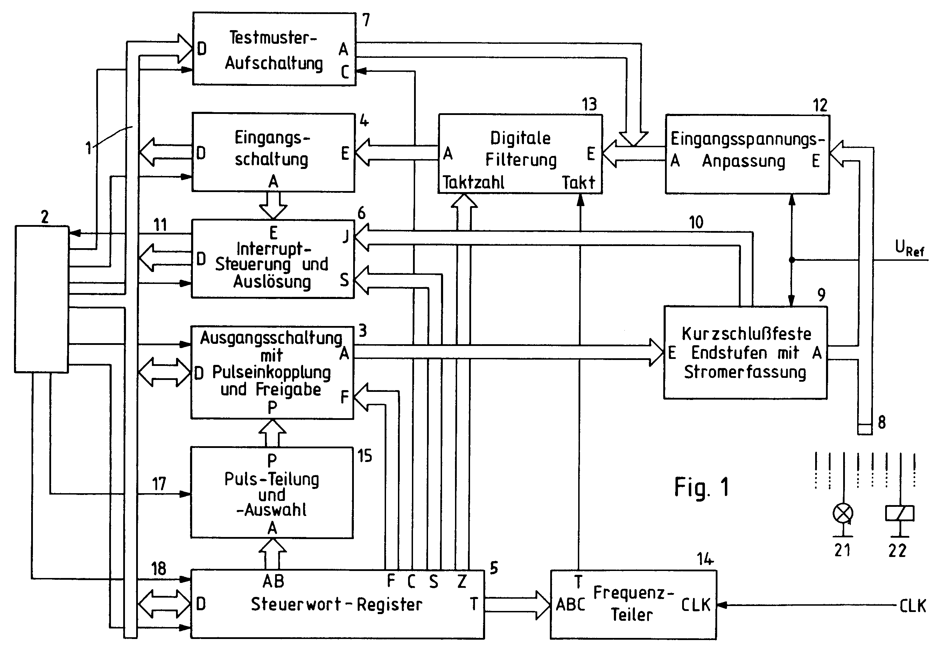

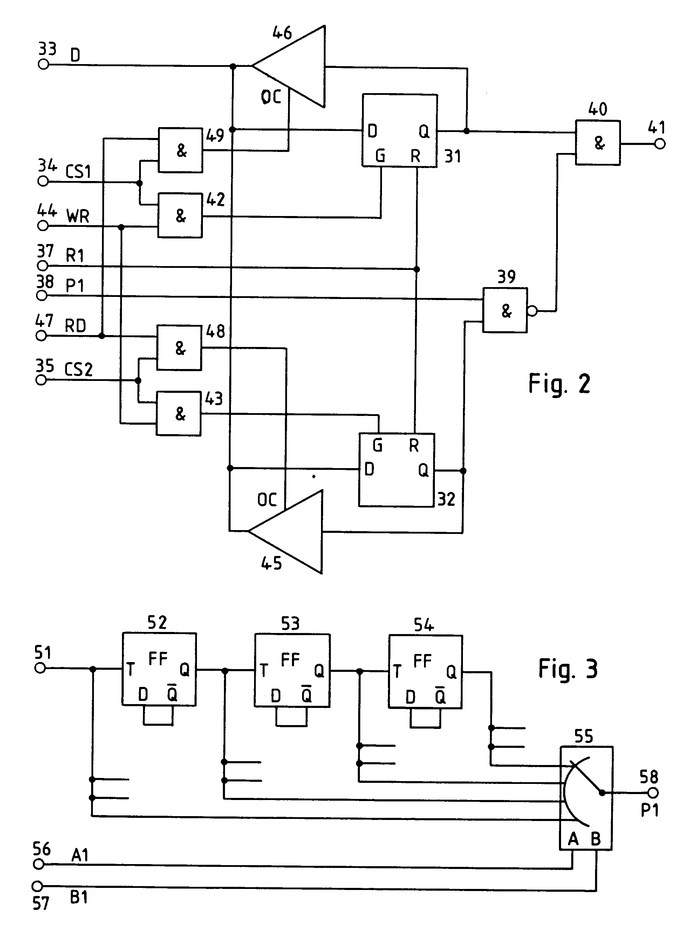

Die in den Figuren 2 bis 9 dargestellten Schaltungen bilden die wichtigsten Komponenten des Systems nach Fig. 1. Die Schaltungen sind für jeweils acht parallele Signale ausgelegt. Von wenigen Ausnahmen abgesehen, sind in den Figuren 2 bis 9 lediglich Schaltungen für jeweils eines der acht parallelen Signale dargestellt. Gleiche Teile sind in den Figuren mit gleichen Bezugszeichen versehen.

Fig. 1 zeigt das Blockschaltbild eines erfindungsgemäßen Ein/Ausgabe-Systems, welches Teil eines digitalen Steuersystems ist. Das digitale Steuersystem kann mehrere der in Fig. 1 dargestellten Ein/Ausgabe-Systeme, einen oder mehrere Mikroprozessoren sowie Speicher und sonstige Komponenten umfassen. Zur Erläuterung der Erfindung ist von den anderen Komponenten des digitalen Steuersystems lediglich ein Daten-Bus 1 und eine Steuereinheit 2 dargestellt.

An den Daten-Bus 1 sind eine Ausgangsschaltung 3, eine Eingangsschaltung 4, ein Steuerwortregister 5, eine Schaltung 6 zur Auslösung einer Unterbrechung des Programmablaufs (Interrupt) und ein Testmusterregister 7 angeschlossen. Diese Einheiten sind ferner über Steuerleitungen mit der Steuereinheit 2 verbunden, von denen jeweils in Fig. 1 nur eine angedeutet ist. Für die damit übertragenen Signale kann an sich auch ein Adreß- und Steuer-Bus vorgesehen sein. Bei dem Ausführungsbeispiel sind die Einheiten 3 lis 7 und der Daten-Bus 1 für jeweils eine Breite vor 8 Bit ausgelegt.

Über den Daten-Bus 1 werden einer Ausgangsschaltung 3 Signale zugeführt, welche letztlich über einen Ein/Ausgang 8 zu Verbrauchern 21, 22 geleitet werden sollen. Per Programm können einzelne Stellen des acht Bit breiten Ein/Ausgangs 8 als Eingang oder Ausgang geschaltet werden. Bei größeren Systemen wird man jedoch vorzugsweise eine oder mehrere der in Fig. 1 dargestellten Schaltungen als Ausgabe-Schaltungen und andere als Eingabe-Schaltungen betreiben.

Als an die Ein/Ausgänge anzuschließende Verbraucher 21, 22, kommen bei der Steuerung von Maschinen umd Anlagen in erster Linie Kontrolleuchten und magnetisch betätigbare Stellglieder in Frage. Bei derartigen Maschinen und Anlagen hat es sich als günstig herausgestellt, besonders wichtige Signale durch Blinken von Kontrolleuchten darzustellen. Beim Blinken von mehreren Kontrolleuchten, welche von einem Mikroprozessor gesteuert werden, ergibt sich jedoch ein sehr verwirrendes Bild, da die Ein- und Ausschaltzeiten für alle Kontrolleuchten je nach vorliegendem Programm unterschiedlich sind.

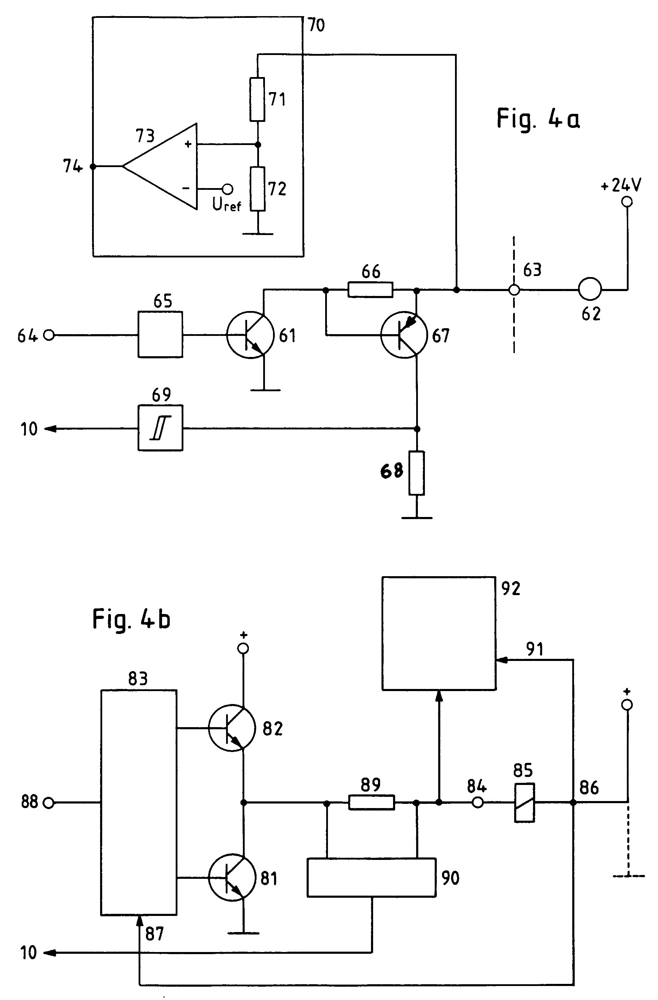

Deshalb ist gemäß einer Weiterbildung der Erfindung in der Ausgangsschaltung 3 eine Verknüpfung der Signale mit Blinksignalen vorgesehen, welche für jede Stelle des der Ausgangsschaltung 3 zugeführten Datenwortes getrennt erzeugt werden können. Dazu wird einem Steuerwortregister 5 über den Daten-Bus 1 ein Steuerwort zugeführt, das unter anderem besagt, welche Stellen des über die Ausgangsschaltung 3 zu leitenden Datenworts pulsieren sollen. Dabei können verschiedene Stellen auch mit verschiedener Frequenz pulsieren. Weitere Einzelheiten hierüber werden später im Zusammenhang mit den Figuren 2 und 3 erläutert.

Die Ausgangssignale der Ausgangsschaltung 3 gelangen zu einer Achtfach-Endstufenschaltung 9, von der weitere Einzelheiten im Zusammenhang mit Fig. 4 erläutert sind. Die Endstufenschaltung 9 ist kurzschlußfest und mit einer Schaltung zur Erfassung des Ausgangsstroms versehen. Die Ausgänge der Endstufenschaltung 9 bilden den Ein/Ausgang 8. Bei Überschreiten eines vorgegebenen Ausgangsstroms wird über eine Datenleitung 10 eine Schaltung 6 zur Auslösung einer Unterbrechung des Programms (Interrupt-Auslösung) angesteuert. Die Schaltung 6 ist über eine Leitung 11 direkt mit der Steuereinheit 2 des digitalen Steuersystems verbunden, wo das zur Zeit in Bearbeitung befindliche Programm unterbrochen wird, um auf ein Fehlerermittlungs-Programm überzugehen.

Vom Ein/Ausgang 8 gelangen zu überwachende Ausgangssignale und/oder Eingangssignale von Gebern, beispielsweise Endschaltern oder Notausschaltern, zu einer Anpassungsschaltung 12. In dieser Schaltung wird in erster Linie der Pegel der möglicherweise über längere Leitungen geleiteten Eingangssignale an den Pegel des digitalen Systems, beispielsweise TTL, angepaßt. Dabei können zu einem gewissen Grade durch Schwellwert-Charakteristiken überlagerte Brummstörungen unterdrückt werden und durch Verwendung von Differenzverstärkern Signale, welche symmetrisch auf zwei Leitungen vom Geber zur Anpassungsschaltung 12 übertragen wurden, auf einer Leitung weitergeleitet werden.

Ferner verfügt eine Ausführungsform der Anpassungsschaltung 12 über eine Besonderheit, die darin besteht, daß ihr ein Bezugspotential zugeführt wird. Mit diesem Bezugspotential sind die von den Ein/Ausgängen 8 abgewandten Anschlüsse der Geber verbunden. Je nachdem, ob dieses Bezugspotential der Betriebsspannung von beispielsweise +24 V oder Massepotential entspricht, erfolgt eine derartige Anpassung in der Anpassungsschaltung 12, daß an den Ausgängen der Anpassungsschaltung 12 stets der gleiche logische Pegel einem vorgegebenen Schaltzustand des Gebers zugeordnet ist.

Die Ausgangssignale der Anpassungsschaltung 12 werden einem digitalen Filter 13 zugeführt, das Signale, welche derart kurz sind, daß sie keine "echten" Signale eines Gebers sein können, unterdrückt. Zur Anpassung des digitalen Filters 13 an den jeweiligen Geber wird sowohl die Frequenz des Taktsignals als auch die Zahl der Takte für die Filterung gesteuert. Und zwar erfolgt die Steuerung wiederum über das Steuerwortregister 5, welchem einerseits die Taktzahl entnommen wird und von dem einem Frequenzteiler 14 ein Teilerwert zugeführt wird.

Die Signale, die das digitale Filter 13 passiert haben, werden über die Eingangsschaltung 4 dem Bus-System 1 und der Interrupt-Auslöseschaltung 6 zugeführt. Zur Überwachung des digitalen Filters 13 und der Eingangsschaltung 4 werden vom Bus-System 1 über ein Testmusterregister 7 dem Eingang des digitalen Filters 13 Signale zugeführt, welche ein Testmuster darstellen.

Bei der Benutzung des Systems zur Ausgabe werden die an die Verbraucher 21, 22 weiterzuleitenden Signale jeweils als eine Stelle eines Acht-Bitwortes über das Bus-System 1, die Ausgangsschaltung 3 und die Endstufenschaltung 9 zum Ausgang geleitet. Einige von ihnen werden gepulst, wozu der Ausgangsschaltung 3 über das Steuerwortregister 5 und einen Pulsfrequenzteiler 15 die erforderlichen Impulse zugeführt werden. Ist ein Verbraucher ausgeschaltet, so liegt an dem entsprechenden Anschluß des Ein/Ausgangs 8 24 V an, während bei eingeschaltetem Verbraucher 0 V ansteht. Diese Information wird über die Anpassungsschaltung 12 und das digitale Filter 13 der Eingangsschaltung 4 zugeführt, von der sie zu gegebener Zeit von der Steuereinheit über das Bus-System 1 abgefragt werden kann, so daß eine regelmäßige Kontrolle, ob an dem Ein/Ausgang 8 die gewünschten Spannungen anliegen, möglich ist.

Fehler, welche beispielsweise durch die Ausgangsschaltung 3, die Endstufenschaltung 9 oder durch den betreffenden Verbraucher verursacht werden, werden erkannt. Damit eine entsprechende Fehleranzeige oder andere geeignete Maßnahmen nicht erst getroffen werden, wenn die Eingangsschaltung 4 im Rahmen des normalen Programmablaufs abgefragt wird, ist die Eingangsschaltung 4 mit der Interrupt-Auslöseschaltung 6 verbunden. Zusätzlich dazu wird direkt von der Endstufenschaltung 9 gemeldet, wenn ein Kurzschluß, also ein zu hoher Ausgangsstrom einer der Endstufen entnommen wird.

Zusätzlich werden das digitale Filter 13 und die Eingangsschaltung 4 regelmäßig - beispielsweise bei jeder Inbetriebnahme des Steuersystems - durch Aufschaltung eines Prüfmusters an die Eingänge des digitalen Filters 13 überprüft. Dadurch ist bei einem Betrieb des Ein/Ausgabesystems zur Ausgabe eine Unterscheidung möglich, ob bei einem Fehler, welcher in der durch die Ausgangsschaltung 3, die Endstufenschaltung 9, die Anpassungsschaltung 12, das digitale Filter 13 und die Eingangsschaltung 4 gebildeten Schleife auftritt, der Weg für die Ausgangssignale und/oder der Weg für die Eingangssignale fehlerhaft ist.

Zum Betrieb des in Fig. 1 dargestellten Systems zur Eingabe sind an die Anschlüsse des Ein/Ausgangs 8 Geber, vorzugsweise Schalter, angeschlossen. Über die Ausgangsschaltung 3 werden keine Ausgangssignale zugeführt und die Eingangssignale von den Gebern werden wie bereits im Zusammenhang mit der Überprüfung der Ausgangssignale über die Anpassungsschaltung 12, das digitale Filter 13 sowie die Eingangsschaltung 4 dem Bus-System 1 zugeführt.

Im folgenden wird die Funktion des Systems nach Fig. 1 unter Bezugnahme auf die in den Figuren 2 bis 8 dargestellten Einzelheiten erläutert. Dabei erfolgt die Beschreibung der Ausgabe von Signalen, der Weiterleitung von Eingangssignalen, der Überprüfung des Systems sowie der Interrupt-Auslösung in folgenden einzelnen Abschnitten.

### Ausgabe von Signalen

Von der Steuereinheit 2 werden über den Daten-Bus 1 parallel acht Signale für die Ansteuerung von acht Verbrauchern zur Ausgangsschaltung 3 geleitet. Von den acht Verbrauchern sind lediglich zwei, nämlich eine Glühlampe 21 und eine Relaiswicklung 22 dargestellt. In Fig. 2 ist lediglich einer von acht parallelen Kanälen der Ausgangsschaltung 3 dargestellt. Die Dateneingänge D zweier Register 31, 32 sind über den Anschluß 33 mit dem Daten-Bus 1 (Fig. 1) verbunden. Über weitere Eingänge 34, 35 werden Signale CS1 und CS2 von der Steuereinheit zugeführt, womit jeweils für ein Datenwort die Register 31 bzw. die Register 32 zur Übernahme der Eingangssignale D angesteuert werden können. Über einen weiteren Eingang 37 wird ebenfalls von der Steuereinheit 2 ein Freigabesignal F1 zugeführt. Ferner ist für jeden der parallelen Kanäle ein Eingang 38 für ein Pulssignal vorgesehen, welches zusammen mit dem Ausgangssignal des Registers 32 der NICHT-UND-Schaltung 39 zugeführt wird, welche wiederum zusammen mit dem Ausgang des Registers 31 mit einer UND-Schaltung 40 verbunden ist. Vom Ausgang 41 wird das jeweilige Signal der Endstufenschaltung 9 (Fig. 1) zugeführt.

Die Auswahlsignale CS1 und CS2 werden den G-Eingängen der Register 31 und 32 über UND-Schaltungen 42, 43 zugeführt, denen ferner über einen Eingang 44 ein Schreib-Impuls WR zugeleitet wird, wenn Daten in die Register 31 oder 32 eingeschrieben werden sollen. Die in den Registern 31 und 32 gespeicherten Daten können jedoch auch über den Daten-Bus 1 (Fig. 1) gelesen werden. Dazu sind an die Ausgänge Q der Register 31, 32 Tristate-Treiber 45, 46 angeschlossen, deren Ausgänge über den jeweiligen Anschluß 33 mit dem Daten-Bus verbunden sind. Soll der Inhalt eines der Register 31 bzw. 32 gelesen werden, so wird über einen Eingang 47 ein Lese-Impuls RD den beiden UND-Schaltungen 48, 49 zugeführt, worauf der entsprechende Auswahlimpuls CS1 oder CS2 zu dem Ausgangssteueranschluß OC des Tristate-Treibers 45 bzw. 46 geführt wird.

Dieses Auslesen des Inhalts der Register 31 und 32 ist besonders vorteilhaft, wenn die Steuereinheit über mehrere Rechner verfügt. Dabei kann es vorkommen, daß der eine Rechner die Ansteuerung einer Ausgangsschaltung übernimmt, wobei einige der parallelen Ausgangssignale übernommen und andere nach dem Programm des übernehmenden Rechners verändert werden sollen. Der übernehmende Rechner kann dann den Registerinhalt lesen, um danach ein neues Datenwort über den Daten-Bus 1 zu geben, bei welchem die entsprechenden Stellen unverändert sind.

Soll der Ausgang 41 abgeschaltet sein, ist im Register 31 eine logische 0 gespeichert. Der Zustand des Registers 32 ist dann ohne Bedeutung. Soll der Ausgang 41 dauernd eingeschaltet sein, ist im Register 31 eine logische 1 gespeichert und im Register 32 eine logische 0. Diese logische 0 ergibt am Ausgang der NICHT-UND-Schaltung immer eine logische 1, die zusammen mit dem Ausgang des Registers 31 über die UND-Schaltung 40 den Ausgang 41 ständig einschaltet. Soll ein Ausgangssignal pulsieren, um beispielsweise eine Warnleuchte blinken zu lassen, so wird das über den Eingang 38 zugeführte Pulssignal P1 über die NICHT-UND-Schaltung 39 durch das auf logisch 1 gesetzte Register 32 zur UND-Schaltung 40 geführt. Zusammen mit dem auf logisch 1 gesetzten Register 31 ergibt sich über die UND-Schaltung 40 am Ausgang 41 ein pulsierendes Ansteuersignal für die Ausgangsschaltung 9.

Fig. 3 zeigt schematisch ein Blockschaltbild des Pulsfrequenzteilers 15, dem bei 51 ein Pulstaktsignal zugeführt wird. Die Frequenz dieses Pulstaktsignals entspricht der höchsten erforderlichen Puls- bzw. Blinkfrequenz einer Anzeigeleuchte. Flip-Flops 52, 53, 54 bilden eine Frequenzteilerkette. Sowohl der Eingang 51 als auch die Ausgänge der Flip-Flops 52, 53, 54 sind mit Eingängen von jeweils acht Multiplexern verbunden, von denen lediglich ein Multiplexer 55 in Fig. 3 dargestellt ist.

Über weitere Eingänge 56, 57 wird vom Steuerwort-Register 5 (Fig. 1) ein zwei Bit breites Steuerwort dem Multiplexer 55 zugeführt. Weitere entsprechende 2-Bit-Steuerwort-Eingänge sind mit den nicht dargestellten Multiplexern verbunden. In Abhängigkeit vom Steuerwort wird der Ausgang 58 des Multiplexers 55 auf einen der Multiplexer-Eingänge geschaltet, so daß die Puls- bzw. Blinkfrequenz jeweils um den Faktor 2 verändert werden kann.

Die Figuren 4a und b zeigen zwei Ausführungsformen von Endstufen, von denen jeweils acht in der Endstufenschaltung 9 (Fig. 1) vorgesehen sind. Bei der Endstufe nach Fig. 4a ist ein Transistor 61 vorgesehen, welcher außer dem Verbraucher 62 keinen Arbeitswiderstand aufweist. Der Ausgang 63 stellt also einen sogenannten Open-Collector-Ausgang dar. Von der Ausgangsschaltung 3 (Fig. 1) wird das Signal zum Eingang 64 der Endstufe nach Fig. 4a geleitet und über einen nur schematisch dargestellten Treiber 65 der Basis des Transistors 61 zugeführt. In Reihe mit der Kollektor-Emitter-Strecke des Transistors 61 ist ein Strommeßwiderstand 66 angeordnet, der mit der Basis-Emitter-Strecke eines weiteren Transistors 67 überbrückt ist. Im Falle eines Kurzschlusses im Verbraucher 62 wird der Spannungsabfall am Widerstand 66 so groß, daß der weitere Transistor 67 leitend wird und am Widerstand 68 eine Spannung abfällt, welche über einen Schwellwertschalter 69 und eine der Leitungen 10 (Fig. 1) zur Interrupt-Auslöseschaltung 6 geführt wird. Über diese Schaltung kann die Ausgangsschaltung derart angesteuert werden, daß die Endstufe stromlos wird.

Aus verschiedenen Gründen, beispielsweise wegen längerer Leitungen zwischen dem gesamten elektronischen Steuersystem und den einzelnen Verbrauchern, ist für die Verbraucher meistens eine Betriebsspannung von + 24 V vorgesehen. Es können jedoch auch andere Spannungen verwendet werden. Für eine Überprüfung der Ausgangsschaltung ist deshalb eine Anpassung an die verwendeten digitalen Schaltungen, beispielsweise TTL-Schaltungen, erforderlich. Hierzu dient die Anpassungsschaltung 12 (Fig. 1) von der in Fig. 4a die Schaltung 70 für eine von acht Stellen dargestellt ist.

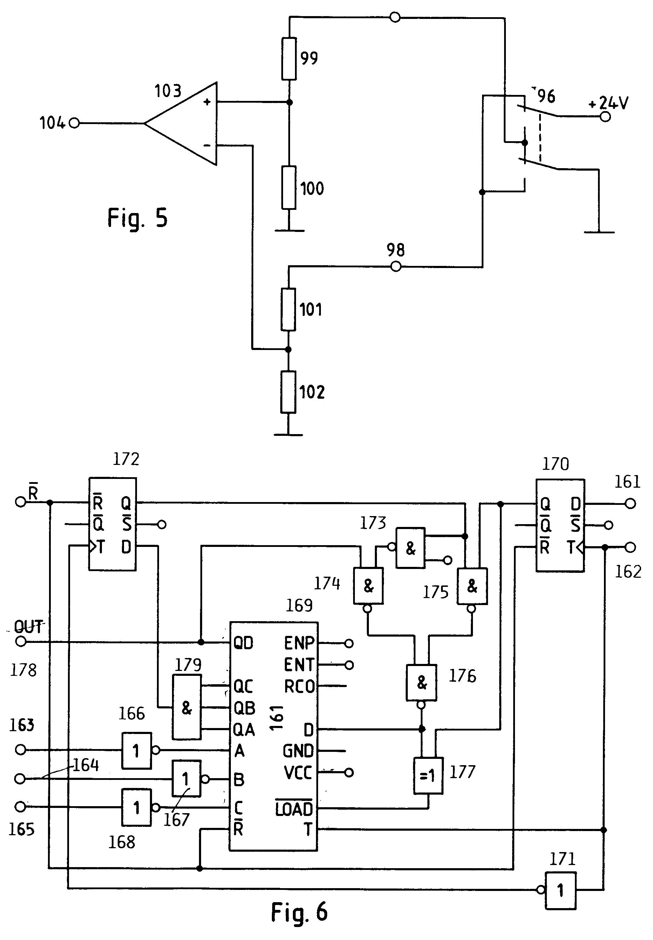

Die Anpassung erfolgt im wesentlichen durch einen Spannungsteiler 71, 72, an den ein Komparator 73 oder ein Schwellwertschalter angeschlossen ist. Der Ausgang 74 des Komparators ist mit einem digitalen Filter 13 (Fig. 1) verbunden, welches später im Zusammenhang mit Fig. 6 näher erläutert wird. Vom digitalen Filter werden die Signale der Eingangsschaltung 4 (Fig. 1) zugeführt und können von der Steuereinheit 2 über den Daten-Bus 1 gelesen werden.

Bei dem erfindungsgemäßen System können folgende Defekte auf dem Weg der zur Ansteuerung der Verbraucher bestimmten Signale zwischen der Steuereinheit 2 und dem jeweiligen Verbraucher 62 festgestellt werden:
1. Eine Unterbrechung zwischen der Steuereinheit und dem Transistor 61 in der Endstufe bewirken trotz verschiedener von der Steuereinheit abgegebenen Signale keine Änderung bei den aus der Eingangsschaltung 4 (Fig. 1) ausgelesenen Signalen.
2 Bei einer Unterbrechung der Leitung zwischen dem Ausgang 63 und dem Verbraucher 62 bzw. der weiteren Leitung zur Betriebsspannungsquelle liegt am Ausgang 63 immer Massepotential an.

Im Zusammenhang mit Fig. 4b wird eine weitere Ausgestaltung der Erfindung erläutert, die ermöglicht, daß Verbraucher bei der gleichen Endstufe mit dem vom Ausgang abgewandten Anschluß entweder an eine positive Betriebsspannung oder an Massepotential angeschlossen werden können. Dieses kann insbesondere dann vorteilhaft sein, wenn ein digitales Steuersystem mit dem erfindungsgemäßen Ein/Ausgabesystem an Druckmaschinen angeschlossen wird, bei welchen Verbraucher einschließlich der Verkabelung bereits vohanden sind. Auch bei der Steuerung mehrerer Druckmaschinen oder Druckmaschinenkomponenten mit Hilfe eines digitalen Steuersystems können Verbraucher und Geber an unterschiedliche Potentiale angeschlossen sein.

Bei der Endstufe nach Fig. 4b bilden zwei in Reihe geschaltete Transistoren 82, 81 zusammen mit einer lediglich schematisch dargestellten Treiberschaltung 83 die Endstufe. Die Transistoren sind derart ansteuerbar, daß der Ausgang 84 einen sogenannten Tristate-Ausgang bildet. Dabei ist der Ausgang 84 hochohmig, sind also beide Transistoren 81, 82 nichtleitend, wenn einem Verbraucher 85, welcher im Falle der Fig. 4b als Relaiswicklung dargestellt ist, keine Spannung zugeführt wird. Der vom Ausgang 84 abgewandte Anschluß 86 des Verbrauchers 85 ist mit einem Steuereingang 87 der Treiberschaltung 83 verbunden. Dadurch wird bewirkt, daß bei Vorliegen einer positiven Spannung am Anschluß 86 von den am Eingang 88 der Endstufe anliegenden Signalen der Transistor 81 gesteuert wird. Liegt jedoch, wie in Fig. 4b gestrichelt angedeutet, der Anschluß 86 auf Massepotential, so wird die Treiberschaltung 83 auf den Transistor 82 umgeschaltet, so daß dieser von den bei 88 zugeführten Signalen gesteuert wird. Bei der in Fig. 4b schematisch dargestellten Anpassungsschaltung 92 wird ebenfalls berücksichtigt, ob der Verbraucher 85 an positives Potential oder an Massepotential angeschlossen ist, wozu das Bezugspotential einem Steuereingang 91 der Anpassungsschaltung 92 zugeführt wird.

### Weiterleitung von Eingangssignalen

Die folgenden Erläuterungen beziehen sich auf die Weiterleitung von Eingangssignalen über die Anpassungschaltung 12, das digitale Filter 13 und die Eingangsschaltung 4. Dabei können die Eingangssignale von Gebern, beispielsweise Schaltern, stammen, die an der zu steuernden Maschine angeordnet sind. Es können jedoch auch Ausgangssignale der Endstufe 9 sein, welche zu überprüfen sind. Während in Fig. 4a im Zusammenhang mit einer Endstufe ein erstes Ausführungsbeispiel einer Anpassungsschaltung dargestellt ist, zeigt Fig. 5 ein zweites Ausführungsbeispiel einer Anpassungsschaltung, welcher von einem Geber 96 über zwei Leitungen Eingangssignale zu einem Differenzeingang zugeführt werden. Lezteres kann insbesondere bei Gebern vorteilhaft sein, welche sicherheitsrelevante und schnelle Funktionen ausüben.

Der Geber 96 ist ein sogenannter Umpolschalter und ist mit jeweils einem Kontaktarm an Massepotential und an + 24 V angeschlossen, so daß die zu den Eingängen 97 und 98 führenden Leitungen wechselweise mit Massepotential und + 24 V verbunden werden können. Über je einen Spannungsteiler 99, 100; 101, 102 sind die Eingänge 97, 98 mit einem nichtinvertieren den und einem invertierenden Eingang eines Differenzverstärkers 103 verbunden, dessen Ausgang 104 einen Ausgang der Anpassungsschaltung bildet.

Von der Anpassungsschaltung 12 werden acht parallele Eingangssignale zum digitalen Filter 13 geführt. Fig. 6 zeigt ein Ausführungsbeispiel eines von acht in der Schaltung 13 vorgesehenen Filtern. Das Filter dient dazu, Störungen durch Kontaktprellen und durch Störimpulse auf den Leitungen zu unterbinden. Es leitet ein Eingangssignal nur dann weiter, wenn sich während der Filterzeit der anliegende Wert nicht ändert.

Des Eingang 161 wird das zu filternde Signal zugeführt, während das Taktsignal T bei 162 zugeleitet wird. Den Eingängen 163, 164 und 165 werden vom Steuerwort-Register 5 (Fig. 1) Signale zugeführt, welche die Taktzahl kennzeichnen, die der Filterung zugrunde gelegt wird. Diese Signale gelangen über Invertierer 166, 167, 168 zu den Eingängen A, B, C des Zählers 169. Die Eingangs- und Ausgangsbezeichnurgen beziehen sich auf einen Zähler vom Typ 161.

Das bei 162 zugeführte Taktsignal taktet ein erstes Flip-Flop 170 und den Zähler 169 und wird über einen Invertierer 171 dem Takteingang eines zweiten Flip-Flops 172 zugeführt. Vier NICHT-UND-Schaltungen 173, 174, 175 und 176 bilden einen Multiplexer, der in Abhängigkeit vom jeweiligen Pegel des Ausgangs Q des Flip-Flops 172 entweder das Ausgangssignal Q des Flip-Flops 170 oder das Ausgangssignal QD des Zählers 169 an den Eingang D des Zählers 169 weiterleitet. Der Ausgang des Multiplexers sowie der Ausgang Q des Flip-Flops 170 sind mit den Eingängen einer Exklusiv-ODER-Schaltung 177 verbunden, deren Ausgang an den LOAD-Eingang des Zählers 169 angeschlossen ist.

Bei unverändertem Signal am Eingang 161 wird das Signal am Ausgang der NICHT-UND-Schaltung 176 über den Multiplexer zu dem D-Eingang des Zählers zurückgeführt. Da Gleichheit zwischen dem Eingangs- und dem Ausgangssignal besteht, ist LOAD aktiv low. Ändert sich das Signal am Eingang 161, so wird das Signal am LOAD-Eingang high und der Zähler 169 beginnt zu zählen. Bei einer vorgegebenen Filterzahl von 3 ist der Zählerstand 4.

Geht das Eingangssignal wieder auf seinen alten Zustand, bevor der Zähler 169 den Wert 7 erreicht, wird LOAD wieder low und die Filterung wird abgebrochen.

Erreicht der Zähler seinen Endstand 7, wird über die Dreifach-UND-Schaltung 179 an den D-Eingang des Flip-Flops 172 der Pegel high angelegt. Bei der nächsten negativen Flanke des Taktes nimmt der Ausgang Q des Flip-Flops 172 den Pegel high an und schaltet den Multiplexer auf den Q-Ausgang des Flip-Flops 170, so daß der dann vorhandene Pegel des Eingangssignals am D-Eingang des Zählers 169 anliegt. LOAD wird wieder low, da Gleichheit zwischen Eingang und D-Eingang des Zählers 169 besteht, und schaltet die Eingangsinformation an den Ausgang 178 durch. Gleichzeitig wird der D-Eingang des Flip-Flops 172 durch die geladene Filterzahl 3 low. Bei der nächsten negativen Flanke des Taktes wird der Ausgang Q des Flip-Flops 172 ebenfalls low und schaltet den Multiplexer um, so daß wieder das Ausgangssignal des Zählers 169 auf dessen D-Eingang zurückgeführt wird.

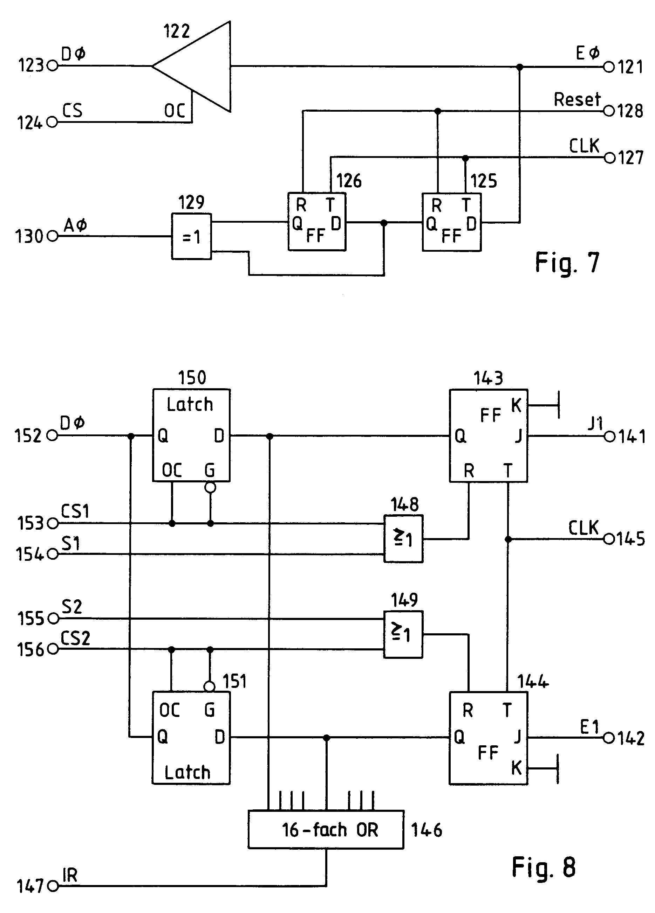

Acht parallele Ausgangssignale des digitalen Filters 13 (Fig. 1) werden der Eingangsschaltung 4 zugeführt. Ein Ausführungsbeispiel der Eingangsschaltung wird im folgenden an Hand von Fig. 7 erläutert, welche einen der acht Kanäle in der Eingangsschaltung 4 darstellt. Bei 121 wird das Ausgangssignal des digitalen Filters 13 (Fig. 1) zugeführt und kann über einen Tristate-Treiber 122 und den Ausgang 123 dem Daten-Bus 1 (Fig 1) zugeführt werden. Dazu wird über einen Steuereingang 124 dem Tristate-Treiber 122 ein Auswahlsignal CS zugeführt.

Über einen Eingang 127 wird der Systemtakt CLK zu den Takteingängen von zwei Flip-Flops 125 und 126 geleitet. Mit den Flip-Flops 125, 126 wird das Eingangssignal um jeweils eine Taktperiode verzögert. Mit Hilfe einer Antivalenzschaltung 129 wird festgestellt, ob sich von einem Takt zum folgenden das Eingangssignal geändert hat. Ist dieses der Fall, so wird bei dem Ausgang 130 ein Signal zur Interrupt-Auslösung abgegeben.

### Überprüfung des Systems

Wie bereits im Zusammenhang mit der Ausgabe von Signalen und Peripherie-Einheiten erläutert, ist mit dem Einlesen der ausgegebenen Signale bereits eine Überprüfung des Ein/Ausgabe-Systems möglich. Eine weitere Prüfung findet dadurch statt, daß den Eingängen des digitalen Filters Testmuster aufgeschaltet werden können und daß die dadurch entstehenden Ausgangssignale der Eingangsschaltung 4 auf Übereinstimmung geprüft werden. Dadurch erhöht sich die Sicherheit bei der Benutzung des erfindungsgemäßen Systems zur Eingabe. Ferner wird dadurch eine genauere Lokalisierung von Fehlern bei der Benutzung des erfindungsgemäßen Systems zur Ausgabe ermöglicht.

Zur Aufschaltung des Testmusters wird von der Steuereinheit 2 (Fig. 1) über den Daten-Bus 1 ein Testmuster in das Testmusterregister 7 eingeschrieben und den Eingängen des digitalen Filters 13 zugeführt. Der Zeitpunkt des Aufschaltens des Testmusters wird durch ein Steuerbit im Steuerwortregister 5 bestimmt. Das Testmusterregister 7 kann in einfacher Weise mit erhältlichen Bauelementen verwirklicht werden, so daß sich eine nähere Erläuterung erübrigt. Es enthält im wesentlichen ein Achtfach-Register mit Tristate-Ausgängen.

Zweckmäßigerweise besteht das Testmuster darin, daß ein Wert 1 nacheinander in den acht parallelen Kanälen auftritt, wobei die anderen Kanäle mit null beaufschlagt sind. Dadurch wird unter anderem jeder der zu prüfenden Kanäle auf einen Schluß mit einem Nachbarkanal geprüft.

### Interrupt-Auslösung

Von der Eingangsschaltung 4 und von der Endstufenschaltung 9 werden jeweils acht parallele Signale zur Schaltung 6 zur Interrupt-Auslösung geleitet. Jeweils ein Signal von der Eingangsschaltung 4 gelangt über einen Eingang 141 (Fig. 8) zum J-Eingang eines JK-Flip-Flops 143, in welches das Signal mit einem bei 145 zugeführten Takt CLK übernommen wird. Jeweils eines der von der Endstufenschaltung 9 (Fig. 1) zugeführten Signale wird über einen Eingang 142 einem JK-Flip-Flop 144 zugeleitet, in welches es ebenfalls mit dem Takt CLK übernommen wird. Steht an einem Ausgang der 16 Flip-Flops 143, 144 eine 1 an, so wird über die 16-fach-ODER-Schaltung und den Ausgang 147 ein Interrupt-Signal an die Steuereinheit gegeben.

Bei Systemen mit mehreren Schaltungen zur Auslösung eines Interrupts fragt die Steuereinheit reihum die einzelnen Schaltungen ab, welcher Eingang den Interrupt ausgelöst hat. Bei diesem sogenannten Polling werden bei der in Fig. 8 dargestellten Schaltung nacheinander durch die bei 153 und 156 zugeführten Auswahlimpulse CS1 und CS2 die Ausgänge der Flip-Flops 143, 144 über die Register 150, 151 abgefragt. Die Ausgänge der Register 150, 151 sind mit jeweils einer Leitung des Daten-Busses über den Anschluß 152 verbunden. Während des Auslesens der Register 150, 151 sind deren D-Eingänge gesperrt, damit ein Rucksetzen der Flip-Flops 143, 144 nicht den Inhalt der Register 150, 151 verändert.

Über die Eingänge 154, 155 und die ODER-Schaltungen 148, 149 können den Reset-Eingängen der Flip-Flops 143, 144 aus dem Steuerwortregister 5 (Fig. 1) Signale S1 bzw. S2 zugeführt werden, mit denen die Weiterleitung einzelner Fehlersignale unterbunden werden kann.

Im Rahmen der Erfindung kann die Interrupt-Auslösung auch über einen Interrupt-Controller erfolgen, der einen Interrupt-Vektor an die Steuereinheit liefert.

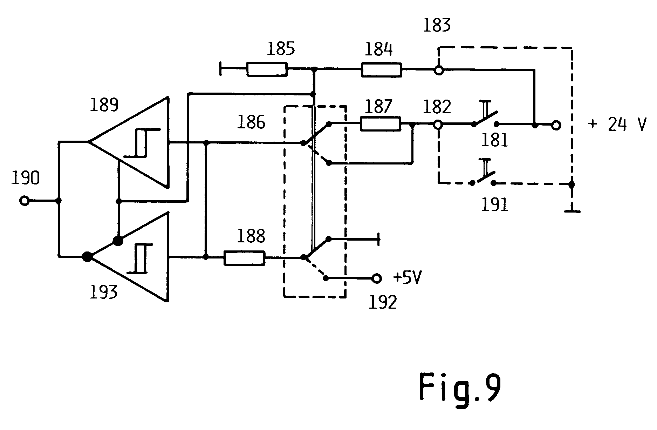

Mit Hilfe der in Fig. 9 dargestellten Anpassungsschaltung kann das Signal eines Gebers, beispielsweise eines Schalters 181, unabhängig davon empfangen werden, ob der von dem Eingang 182 abgewandte Anschluß des Schalters 181 mit Massepotential oder mit einer von Massepotential abweichenden Referenzspannung verbunden ist. Ein mit einer derartigen Anpassungsschaltung versehenes erfindungsgemäßes System kann zur Steuerung einer Maschine verwendet werden, bei welcher sogar beide Anschlußarten gemischt auftreten, beispielsweise bei der Zusammenschaltung von Maschinenkomplexen verschiedener Baureihen, ohne daß es einer gesonderten Anpassung der Schaltungen bzw. des Programms an die Geber im einzelnen bedarf.

Zur automatischen Anpassung an die unterschiedlichen Betriebsweisen der Geber wird die Referenzspannung (entweder Massepotential oder eine von Massepotential abweichende Spannung) über einen Eingang 183 und einen Spannungsteiler 184, 185 dem Steuereingang eines steuerbaren zweipoligen Umschalters 186 zugeführt. Weicht die Bezugsspannung von Massepotential ab, so befindet sich der Umschalter 186 in der oberen, durchgezogen gezeicheten Stellung.

Ferner wird die Ausgangsspannung des Spannungsteilers 184, 185 Schalteingängen zweier Schwellwertschalter 189 und 193 zugeféhrt - und zwar dem Schwellwertschalter 193 in negierter Form. Dadurch wird bewirkt, daß das Ausgangssignal des Schwellwertschalters 189 zum Ausgang 190 weitergeleitet wird, wenn am Spannungsteiler 184, 185 eine positive Spannung anliegt. Der Ausgang des Schwellwertschalters 193 ist dann gesperrt. Vorzugsweise wird dazu ein Schwellwertschalter mit einem sogenannten Tristate-Ausgang verwendet, der bei einem entsprechenden Signal am Schalteingang hochohmig ist. Entspricht die Spannung am Spannungsteiler 184, 185 Massepotential, so wird die Ausgangsspannung des Schwellwertschalters 193 zum Ausgang 190 weitergeleitet, während der Ausgang des Schwellwertschalters 189 gesperrt ist. Die Schwellwertschalter 189, 193 unterscheiden sich dadurch, daß der Schwellwertschalter 189 zwischen dem Eingangs- und dem Ausgangssignal keine Invertierung vornimmt, während beim Schwellwertschalter 193 eine Invertierung vorgesehen ist.

Wird der an + 24 V angeschlossene Schalter 181 betätigt, wird die positive Spannung über den aus den Widerständen 187, 188 gebildeten Spannungsteiler den Eingängen der Schwellwertschalter zugeführt. Der Schwellwertschalter 189 gibt daraufhin ebenfalls positives Potential von beispielsweise 5 V an den Ausgang 190. Bei geöffnetem Schalter 181 liegt am Eingang des Schwellwertschalters 189 0 V, so daß auch die Ausgangsspannung 0 V beträgt.

Ist jedoch anstelle des Schalters 181 ein mit Massepotential verbundener Schalter 191 an die Anpassungsschaltung angeschlossen und gleichzeitig der Punkt 183 ebenfalls mit Massepotential verbunden, so befindet sich der Umschalter 186 in der unteren Stellung und der Schwellwertschalter 193 ist aktiv. Dann liegt bei geöffnetem Schalter 191 am Eingang des Schwellwertschalters 193 die über den Eingang 192 und den Widerstand 188 zugeführte Spannung von + 5 V an. Die Ausgangsspannung des Schwellwertschalters 193 und damit die Spannung am Ausgang 190 beträgt dann 0 V. Ist der Schalter 191 geschlossen, liegt Massepotential am Eingang des Schwellwertschalters 193, so daß die Ausgangsspannung dann 5 V beträgt.

Unabhängig davon, ob der jeweilige Schalter mit Massepotential oder mit einer positiven Betriebsspannung verbunden ist, gibt also die Anpassungsschaltung nach Fig. 9 den einen logischen Pegel ab, wenn der Schalter geschlossen ist, und den anderen, wenn der Schalter geöffnet ist. Zusammen mit einem Steuersystem können also beide Arten von Gebern (Schalter an Masse, Schalter an Plus) alternativ oder gemischt verwendet werden, ohne daß es einer besonderen Anpassung der Schaltungen bzw. des Programms an die Geber bedarf. Auch eine Abfrage per Programm, ob die Geber jeweils mit Masse oder Plus verbunden sind, erübrigt sich.

## Patentansprüche

1. Schaltung zur Ein- und Ausgabe von Signalen eines digitalen Steuersystems mit einer Steuereinheit (2), einer mit Eingangsregistern versehenen Eingangsschaltung (4), einer einer Endstufe (9) vorgeschalteten, mit Ausgangsregistern (31, 32) versehenen Ausgangsschaltung (3) und einem Bussystem (1) zur Steuerung und Prüfung der Eingangsschaltung (4), der Ausgangsschaltung (3) mit der Endstufe (9) und/oder der mit der Eingangsschaltung (4) verbundenen Peripherie-Einheiten (21, 22, 62, 85)
**dadurch gekennzeichnet**,
- daß die Ausgangssignale (8) der Endstufe (9) und der Inhalt der Ausgangsregister (31, 32) über getrennte Wege stetig abfragbar sind, wobei die Abfrage der Ausgangssignale (8) mittels einer über ein digitales Filter (13) mit der Eingangsschaltung (4) verbundenen Eingangsspannungs-Anpassung (12) potentialunabhängig und die Abfrage der Inhalte der Ausgangsregister (31, 32) über eine in der Ausgangsschaltung (3) angeordnete Logikschaltung erfolgt,
- daß zur Prüfung der Eingangsschaltung (4) deren Eingänge (E) von der Steuereinheit (2) über eine Testmusteraufschaltung (7) Testsignale über ein digitales Filter (13) aufschaltbar sind, wobei in der Steuereinheit (2) die infolge des Testmusters entstehenden Ausgangssignale (D) der Eingangsschaltung (4) auf Übereinstimmung geprüft werden,
- daß eine mit der Eingangsschaltung (4) und der Endstufe (9) verbundene Interruptsteuerung (6) zur Auslösung einer Unterbrechung des Programmablaufs mittels eines mit der Steuereinheit (2) verbundenen Anschlusses (11) vorgesehen ist, wobei die Unterbrechung durch festgestellte Fehler in der Eingangsschaltung (4), der Ausgangsschaltung (3), der Endstufenschaltung (9) oder in den Peripherieeinheiten (21,22,62,85) ausgelöst wird.

2. Schaltung nach Anspruch 1,
**dadurch gekennzeichnet**,
daß die den Ausgängen der Peripherieeinheiten (21,22,62,85) vorgeschalteten Endstufen (9) mindestens einen im Schaltbetrieb arbeitenden Transistor (61,81,82) aufweisen.

3. Schaltung nach Anspruch 1 oder 2,
**dadurch gekennzeichnet**,
daß die den Ausgängen der Peripherieeinheiten (21,22,62,85) vorgeschalteten Endstufen (9) zwei Transistoren (81,82) aufweisen, welche in Reihe geschaltet und derart ansteuerbar sind, daß jeweils der eine, der andere oder beide Transistoren (81,82) sich im nichtleitenden Zustand befinden.

4. Schaltung nach Anspruch 1, 2 oder 3,
**dadurch gekennzeichnet**,
daß die Endstufen Einrichtungen (66,67,89,90) zur Erfassung des Ausgangsstroms aufweisen, wobei bei Überschreitung des Stroms eine Unterbrechung des Programmablaufs mittels der Interruptsteuerung (6) erfolgt.

5. Schaltung nach mindestens einem der vorherigen Ansprüche,
**dadurch gekennzeichnet**,
daß zum Abfragen der Ausgangssignale (8) in der Eingangsschaltung (4) Eingangsregister vorgesehen sind, deren Eingänge mit den Ausgängen der Pheripherieeinheiten (21,22,62,85) der Endstufen und deren Ausgänge (A) mit dem Bussystem (1) verbunden sind.

6. Schaltung nach mindestens einem der vorherigen Ansprüche,
**dadurch gekennzeichnet**,
daß die Ausgänge der Endstufen als Ein-/Ausgänge ausgelegt sind, wobei durch entsprechende Programmierung der Steuereinheit (2) jeder der Ein-/Ausgänge einzeln als Eingang oder Ausgang festlegbar ist.

7. Schaltung nach mindestens einem der Ansprüche 1 bis 5,
**dadurch gekennzeichnet**,
daß die Peripherie-Einheiten (85) jeweils zwei Anschlüsse aufweisen,
daß jeweils ein Anschluß mit einem Ein-/Ausgang der Endstufenschaltung (9) und der jeweils andere Anschluß (86) mit einem Bezugspotential (Betriebsspannung oder Masse) verbunden ist, und
daß das Bezugspotential einem weiteren Eingang (91) der Anpassungsschaltung (92) zur Steuerung zugeführt ist.

8. Schaltung nach Anspruch 6,
**dadurch gekennzeichnet**,
daß bei der Verwendung von Endstufen aus zwei in Reihe geschalteten Transistoren (81,82) die jeweilige Endstufe in Abhängigkeit vom Bezugspotential derart gesteuert wird, daß derjenige Transistor (81,82) angesteuert wird, dessen vom Ausgang (84) abgewandter Anschluß mit vom Bezugspotential abweichender Spannung beaufschlagt ist.

9. Schaltung nach mindestens einem der vorherigen Ansprüche,
**dadurch gekennzeichnet**,
daß die Eingangsschaltung (4) und das Testmusterregister (7) für jeweils mehrere parallele Signale, welche ein mehrstelliges Datenwort bilden, vorgesehen sind und daß ein Testmuster dadurch gebildet wird, daß nacheinander die einzelnen Stellen nach einem ersten Wert einen zweiten Wert und dann wieder den ersten Wert annehmen.

10. Schaltung nach mindestens einem der vorherigen Ansprüche,
**dadurch gekennzeichnet**,
daß die Eingangsschaltung (4) Mittel (125,126,129) zum Vergleich aufeinanderfolgender Werte je einer Stelle aufweist, welche mit der Interrupt-Schaltung (6) zur Auslösung einer Unterbrechung des Programmablaufs (Interrupt) verbunden sind.

11. Schaltung nach mindestens einem der vorherigen Ansprüche,
**dadurch gekennzeichnet**,
daß die Ausgangsschaltung (3) für mehrere parallele Signale vorgesehen ist und
daß Pulssignale durch Frequenzteilung eines zugeführten Pulstaktsignals erzeugt werden, wobei für jedes der parallelen Signale unabhängig voneinander ein Teilungsverhältnis eingestellt werden kann.

12. Schaltung nach mindestens einem der vorherigen Ansprüche,
**dadurch gekennzeichnet**,
daß zur Einstellung des Teilungsverhältnisses je parallelem Signal ein Multiplexer (55) vorgesehen ist, der in Abhängigkeit von ihm zugeführten Steuersignalen einen von mehreren Ausgängen eines Frequenzteilers (52,53,54) mit einem Gatter (39) in der Ausgangsschaltung (3) verbindet, und
daß die Steuersignale von einem Steuerwort-Register (5) zugeführt sind, das eingangsseitig mit der Steuereinheit (2) verbunden ist.

13. Schaltung nach mindestens einem der vorherigen Ansprüche,
**dadurch gekennzeichnet**,
daß die Interrupt-Schaltung (6) zur Auslösung einer Unterbrechung einen mit der Steuereinheit (2) verbundenen Ausgang (147) aufweist, der bei Auftreten eines Signals an mindestens einem der Eingänge (141,142) ein Unterbrechungssignal abgibt, und
daß für jeden Eingang (141,142) eine Registerstelle vorgesehen ist, deren Inhalt von der Steuereinheit (2) abfragbar ist.

14. Schaltung nach Anspruch 13,
**dadurch gekennzeichnet**,
daß einzelne den Eingängen (141,142) zugeführte Signale in Abhängigkeit vom Inhalt eines Steuerwortregisters (5) sperrbar sind.

## Claims

1. Circuit for the input and output of signals of a digital control system comprising a control unit (2), an input circuit (4) provided with input registers, an output circuit (3) preceding an output stage (9) and provided with output registers (31, 32), and a bus system (1) for controlling and checking the input circuit (4), the output circuit (3) with the output stage (9) and/or the peripheral units (21, 22, 62, 85) connected to the input circuit (4), characterized in that
- the output signals (8) of the output stage (9) and the contents of the output registers (31, 32) can be continuously interrogated via separate paths, the output signals (8) being interrogated potential-independently by means of an input voltage adaptor (12) connected to the input circuit (4) via a digital filter (13) and the contents of the output registers (31, 32) being interrogated via a logic circuit arranged in the output circuit (3),
- and that for testing the input circuit (4), test signals can be connected via a digital filter (13) to its inputs (E) by the control unit (2) via a test pattern connection arrangement (7), the output signals (D) of the input circuit (4), produced as a consequence of the test pattern, being checked for correspondence in the control unit (2),
- and that an interrupt control (6) connected to the input circuit (4) and the output stage (9), for triggering an interruption in the programme run by means of a connection (11) connected to the control unit (2) is provided, the interruption being triggered by errors found in the input circuit (4), the output circuit (3), the output stage circuit (9) or in the peripheral units (21, 22, 62, 85).

2. Circuit according to Claim 1, characterized in that the output stages (9) preceding the outputs of the peripheral units (21, 22, 62, 85) exhibit at least one transistor (61, 81, 82) operating in switching mode.

3. Circuit according to Claim 1 or 2, characterized in that the output stages (9) preceding the outputs of the peripheral units (21, 22, 62, 85) exhibit two transistors (81, 82) which are connected in series and can be driven in such a manner that in each case one, the other or both transistors (81, 82) are in the non-conducting state.

4. Circuit according to Claim 1, 2 or 3, characterized in that the output stages exhibit devices (66, 67, 89, 90) for detecting the output current, the programme run being interrupted by means of the interrupt control (6) when the current is exceeded.

5. Circuit according to at least one of the preceding claims, characterized in that, for the purpose of interrogating the output signals (8), input registers are provided in the input circuit (4), the inputs of which registers are connected to the outputs of the peripheral units (21, 22, 62, 85) of the output stages and the outputs (A) of which are connected to the bus system (1).

6. Circuit according to at least one of the preceding claims, characterized in that the outputs of the output stages are designed as inputs/outputs, each of the inputs/outputs being individually definable as input or output by appropriate programming of the control unit (2).

7. Circuit according to at least one of Claims 1 to 5, characterized in that the peripheral units (85) in each case exhibit two connections, in that in each case one connection is connected to one input/output of the output stage circuit (9) and the in each case other connection (86) is connected to a reference potential (operating voltage or earth), and in that the reference potential is supplied as control to a further input (91) of the adapter circuit (92).

8. Circuit according to Claim 6, characterized in that when output stages of two series-connected transistors (81, 82) are used, the respective output stage is controlled in dependence on the reference potential in such a manner that the transistor (81, 82) to the connection of which facing away from the output (84) the voltage deviating from the reference potential is applied, is driven.

9. Circuit according to at least one of the preceding claims, characterized in that the input circuit (4) and the test pattern register (7) are provided for in each case a plurality of parallel signals which form a multi-digit data word and that a test pattern is formed by the individual digits successively assuming a second value after a first value and then the first value again.

10. Circuit according to at least one of the preceding claims, characterized in that the input circuit (4) exhibits means (125, 126, 129) for comparing successive values of one digit each, which are connected to the interrupt circuit (6) for triggering an interruption in the programme run (interrupt).

11. Circuit according to at least one of the preceding claims, characterized in that the output circuit (3) is provided for a plurality of parallel signals and in that pulse signals are generated by frequency division of a supplied pulse clock signal, it being possible to set a dividing ratio for each of the parallel signals independently of one another.

12. Circuit according to at least one of the preceding claims, characterized in that, for setting the dividing ratio of each parallel signal, a multiplexer (55) is provided which, in dependence on control signals supplied to it, connects one of a plurality of outputs of a frequency divider (52, 53, 54) to a gate (39) in the output circuit (3), and in that the control signals are supplied by a control word register (5), which is connected on the input side to the control unit (2).

13. Circuit according to at least one of the preceding claims, characterized in that the interrupt circuit (6) for triggering an interruption exhibits an output (147) connected to the control unit (2), which outputs an interrupt signal on the occurrence of a signal at at least one of the inputs (141, 142), and in that for each input (141, 142), a register digit is provided, the content of which can be interrogated by the control unit (2).

14. Circuit according to Claim 13, characterized in that individual signals supplied to the inputs (141, 142) can be inhibited in dependence on the content of a control word register (5).

## Revendications

1. Circuit pour l'entrée et la sortie de signaux d'un système de commande numérique comportant une unité de commande (2), un circuit d'entrée (4) comportant des registres d'entrée, un circuit de sortie (3) branché en amont d'un étage final (9) et comportant des registres de sortie (31, 32), et un système de bus (1) servant à commander et contrôler les circuits d'entrée (4), le circuit de sortie (3) équipé de l'étage final (9) et/ou les unités périphériques (21, 22, 62, 85) reliées au circuit d'entrée (4), caractérisé en ce
- que les signaux de sortie (8) de l'étage final (9) et le contenu des registres de sortie (31, 32) peuvent être interrogés en permanence par l'intermédiaire de voies séparées, l'interrogation des signaux de sortie (8) étant réalisée, d'une manière indépendante du potentiel, au moyen d'une unité (12) d'adaptation de la tension d'entrée, qui est reliée par l'intermédiaire d'un filtre numérique (12) au circuit d'entrée (4), et l'interrogation des contenus des registres de sortie (31, 32) étant réalisée par l'intermédiaire d'un circuit logique monté dans le circuit de sortie (3),
- que pour le contrôle du circuit d'entrée (4), les entrées (E) de ce circuit d'entrée peuvent être chargées par l'unité de commande (2), par l'intermédiaire d'un circuit (7) d'application de profils de test, par des signaux de test et ce par l'intermédiaire d'un filtre numérique (13), les signaux de sortie (D), qui apparaissent sur la base du profil de test, du circuit d'entrée (4) étant contrôlés dans l'unité de commande (2) pour voir s'ils coïncident,
- qu'il est prévu une unité de commande d'interruption (6), qui est raccordée au circuit d'entrée (6) et à l'étage final (9), pour le déclenchement d'une interruption de l'exécution du programme, au moyen d'une borne (11) reliée à l'unité de commande (2), l'interruption étant déclenchée par des défauts détectés dans le circuit d'entrée (4), dans le circuit de sortie (3), dans le circuit d'étages finals (9) ou dans les unités périphériques (21,22,62,85).

2. Circuit selon la revendication 1, caractérisé en ce que les étages finals (9), qui sont branchés en amont des sorties des unités périphériques (21,22,62,45), possèdent au moins un transistor (61,81,82) travaillant selon un fonctionnement de commutation.

3. Circuit selon la revendication 1 ou 2, caractérisé en ce que les étages finals (9) branchés en amont des sorties des unités périphériques (21,22,62,85) comportent deux transistors (81,82), qui sont branchés en série et peuvent être commandés de telle sorte que respectivement l'un des transistors (81,82), l'autre de ces transistors ou ces deux transistors ne sont pas placés à l'état conducteur.

4. Circuit selon la revendication 1, 2 ou 3, caractérisé en ce que les étages finals comportent des dispositifs (66,67,89,90) servant à détecter le courant de sortie, auquel une interruption de l'exécution du programme est réalisée au moyen du dispositif de commande d'interruption (6), lors d'un dépassement du courant.

5. Circuit selon au moins l'une des revendications précédentes, caractérisé en ce que pour l'interrogation des signaux de sortie (8) il est prévu, dans le circuit d'entrée (4), des registres d'entrée, dont les entrées sont raccordées aux sorties des unités périphériques (21,22,62,85) des étages finals et dont les sorties (A) sont raccordées au système de bus (1).

6. Circuit selon au moins l'une des revendications précédentes, caractérisé par le fait que les sorties des étages finals sont agencées sous la forme d'entrées/sorties, dont chacune peut être déterminée individuellement comme étant une entrée ou une sortie au moyen d'une programmation correspondante de l'unité de commande (2).

7. Circuit selon au moins l'une des revendication 1 à 5, caractérisé par le fait
que les unités périphériques (85) comportent chacune deux bornes,
que respectivement une borne est reliée à une entrée/sortie du circuit (9) de l'étage final et que l'autre borne respective (86) est placée à un potentiel de référence (tension de service ou masse), et
que le potentiel de référence est envoyé, pour la commande, à une autre entrée (91) du circuit d'adaptation (92).

8. Circuit selon la revendication 6, caractérisé en ce que dans le cas d'utilisation d'étages finals constitués de deux transistors (81, 82) branchés en série, l'étage final respectif est commandé en fonction du potentiel de référence de telle sorte que le transistor (81, 82), dont la borne, située à l'opposé de la sortie (84), est chargée par la tension qui diffère du potentiel de référence, est commandé.

9. Circuit selon au moins l'une des revendications précédentes, caractérisé en ce que le circuit d'entrée (4) et le registre de profil de test (7) sont prévus pour respectivement plusieurs signaux parallèles, qui forment un mot de données à plusieurs chiffres, et qu'un profil de test est formé par le fait que les différents chiffres prennent successivement une seconde valeur après une première valeur, puis à nouveau la première valeur.

10. Circuit selon au moins l'une des revendications précédentes, caractérisé en ce que le circuit d'entrée (4) comporte des moyens (125, 126, 129) pour comparer des valeurs successives respectivement d'un chiffre, ces moyens étant reliés au circuit d'interruption (6) pour le déclenchement et l'interruption de l'exécution du programme (interruption).

11. Circuit selon au moins l'une des revendications précédentes, caractérisé en ce
que le circuit de sortie (3) est prévu pour plusieurs signaux parallèles, et
que des signaux impulsionnels sont produits par division de la fréquence d'un signal de cadence d'impulsions envoyé, un rapport de division pouvant être réglé pour chacun des signaux parallèles, et ce d'une manière indépendante pour les différents signaux.

12. Circuit selon au moins l'une des revendications précédentes, caractérisé en ce
que pour le réglage du rapport de division il est prévu, pour chaque signal parallèle, un multiplexeur (55), qui, en fonction de signaux de commande qui lui sont envoyés, relie l'une de plusieurs sorties d'un diviseur de fréquence (52, 53, 54) à une porte (39) dans le circuit de sortie (33), et que les signaux de commande sont envoyés par un registre de mots de commande (5), qui est raccordé côté entrée à une unité de commande (2).

13. Circuit selon au moins l'une des revendications précédentes, caractérisé en ce
que le circuit d'interruption (6) servant à déclencher une interruption possède une sortie (147) qui est raccordée à l'unité de commande (2) et qui, lors de l'apparition d'un signal sur au moins l'une des entrées (141, 142), délivre un signal d'interruption, et
que pour chaque entrée (141, 142) il est prévu un emplacement de registre, dont le contenu peut être interrogé par l'unité de commande (2).

14. Circuit selon la revendication 13, caractérisé en ce que des signaux individuels envoyés aux entrées (141, 142) peuvent être bloqués en fonction du contenu d'un registre de mots de commande (5).
